# EUROPEAN PATENT SPECIFICATION

(11) **EP 0 783 984 B1**
(45) Date of publication and mention of the grant of the patent: **17.04.2002**
(21) Application number: 96203700.8
(22) Date of filing: 27.12.1996
(51) Int. Cl.: B60G 17/005, B60G 17/015, B60G 21/10

(54) **Suspension means and method for a utility vehicle**
Aufhängungsvorrichtung- und Verfahren für Nutzfahrzeuge
Moyens et méthode de suspension pour véhicules utilitaires

(30) Priority: 13.01.1996 GB 9600693
(43) Date of publication of application: 16.07.1997
(73) Proprietor: New Holland Braud S.A., 85220 Coex (FR)
(72) Inventor: Martin, Jean-Paul M.L., 85800 Le Fenouiller (FR); Pambrun, Louis J.P., 85000 La Roche sur Yon (FR)
(74) Representative: Vandenbroucke, Alberic

(56) References cited:
- EP-A- 0 692 183
- DE-A- 2 450 236
- DE-A- 3 632 416
- FR-A- 2 239 357
- FR-A- 2 518 464
- FR-A- 2 609 262
- FR-A- 2 631 586
- GB-A- 2 290 149
- US-A- 3 976 302
- US-A- 4 247 126
- PATENT ABSTRACTS OF JAPAN vol. 016, no. 391 (M-1298), 19 August 1992 & JP 04 128521 A (NORIHARU NAKAMURA), 30 April 1992

## Description

This invention relates generally to utility vehicles, such as vineyard tractors, grape or berry harvesters or other harvesting machines, which have been developed for use on sloping grounds, and more particularly to a suspension means and a method for improving the stability of the vehicle when travelling uphill or downhill.

In the following description "right hand" and "left hand" references are determined by standing at the rear of the vehicle and facing in the direction of normal forward travel. It is also to be understood that, throughout this description, terms such as "forward", "rearward", "upward", "downward", etc. are words of convenience and are not to be construed as limiting terms.

Utility vehicles usually are operated on a rough and uneven ground. They have a frame with a significant ground clearance for preventing unwanted interferences with the soil surface. Typically, the frame is supported on four or more wheels whereof the front pair is articulately mounted to the frame while the rear wheels are kept in a substantially fixed position thereto. The combination of fixed and articulated wheels insures full ground contact during normal operations. In configurations wherein all wheels are driven, it is particularly important that the wheels are kept in firm ground engagement; otherwise the wheel or wheels which loses or lose contact, may start to spin such that a portion of the traction power is lost.

The position of the vehicle frame is defined by the fixed wheels. When one of the fixed rear wheels enters into a pit or travels over a bump the frame is tilted sideways, while the articulated front wheels remain on the ground. When operating on substantially level terrain, small lateral movements of the frame following from instant variations in the ground contour will cause no problems to the stability of the vehicle. However, it has been experienced that the same amount of motion may be fatal to the stability when the vehicle is travelling along a steep downhill slope. The frame then may pivot about an articulation point at the front of the vehicle and tip over.

US-A-4.247.126 discloses a suspension system for a grape harvester which is designed for travelling over the rows of vines, such that it has a high centre of gravity. The wheels are mounted to double-acting hydraulic cylinders for adjustment of the frame height to the ground and the vines. During normal harvesting operation the rear cylinders are hydraulically blocked as to maintain the rear wheels in a fixed position relative to the frame, thereby providing the vehicle with a fixed rear axle.

The upper and lower chambers of the one front cylinder are permanently connected to the corresponding chambers of the other front cylinder, such that the retraction of the one cylinder causes the extension of the other cylinder by an equal amount. The front of the frame is still supported by the oil enclosed in the upper chambers, but the front wheels are free to move up and down, as if they were mounted on an oscillating axle. This embodiment presents good stability characteristics when travelling on level terrain or uphill slopes, but may turn unstable during steep downhill travel.

In order to remedy thereto, means may be provided for limiting the free circulation of the oil between the front cylinders. FR-A-2.518.464 shows a vehicle with a fixed front axle and an oscillating rear axle, whereof the position is controlled by a pair of interconnected cylinders. When the angle of the frame to the horizontal is exceeding a predetermined value, the flow of the oil between the cylinders is restricted by a non-return valve, such that the rear axle will behave as a second fixed axle and the stability of the vehicle is thereby restored. However, during further travel over the uneven ground, one of the wheels may loose contact with the ground. When this wheel is one of the driven wheels, it will start spinning and motive power will be lost.

US-A-3,976,302 shows an articulated vehicle having oscillating front and rear axles. The axles are mounted by horizontal, forwardly extending pivots to the front and rear portions of the vehicle frame. Their movement can be impaired by pairs of hydraulic cylinders which are connected to a manually controlled distribution valve. The operator can change valve positions to preclude oscillating movement of the front axle only, the rear axle only or both the front and rear axles. He can also select a valve position in which the pivotal movement of one axle results in the opposite movement of the other axle. When the operating conditions for the vehicle are changing, the operator himself has to decide on the most appropriate setting of the valve. The stability of the vehicle still is endangered when the vehicle goes from downhill to uphill travel and the operator neglects to block the appropriate front or rear axle.

DE-A-24 50 236 discloses another articulated utility vehicle having oscillating front and rear axles. Also herein the oscillation of these axles is controlled by the operator through a manually controlled valve. The operator can optimize the stability of the vehicle by blocking the front axle as he uses the front loader or blocking the rear axle as he uses the rear backhoe. No controls are provided for automatic transition from one blocking condition to another.

It therefore is an object of the present invention to overcome the drawbacks of these prior art arrangements and provide means for, on the one hand improving the stability of the vehicle and, on the other hand maintaining all wheels or other ground-engaging members in full engagement with the ground during uphill and downhill travel over uneven ground.

According to one aspect of the present invention, a utility vehicle is provided, comprising:
- a generally horizontal, rectangular frame with opposed sides and opposed ends;
- two first ground-engaging members at a first end of said frame and two second ground-engaging members at an opposite, second end thereof;
- first suspension means, supportingly mounted between said frame and said first ground-engaging members and comprising first oscillation means for accomplishing movement of one first ground-engaging member in opposition to the movement of the other first ground-engaging member;
- second suspension means, supportingly mounted between said frame and said second ground-engaging members comprising second oscillation means for accomplishing movement of one second ground-engaging member in opposition to the movement of the other second ground-engaging member; and
- suspension control means, comprising:
   first oscillation control means, operatively linked to said first oscillation means and changeable between an enabling and an inhibiting state, wherein said movement of the first ground-engaging members is permitted and obstructed respectively; and
   second oscillation control means, operatively linked to said second oscillation means and changeable between an enabling and an inhibiting state, wherein said movement of the second ground-engaging members is permitted and obstructed respectively.

The utility vehicle is characterized in that:
said first and second oscillation control means are linked to prevent a simultaneous enabling state in both the first and the second oscillation control means; and
said suspension control means further comprise a sensor, sensing a variable indicative of the relative position of the vertical projection of the centre of gravity of the utility vehicle with respect to the first and second ground-engaging members and generating an output
which is used in changing the state of the first and the second oscillation control means.

Such sensor could monitor the longitudinal inclination of the frame. When the suspension control means comprise hydraulic cylinders and circuitry, the first and second oscillation control means may include a single 4/2 valve for breaking the oscillation circuitry of the one or other vehicle end. The suspension control means may further comprise control valves for varying the height and/or inclination of the frame.

According to another aspect of the present invention, a method is provided for stabilizing a utility vehicle which comprises:
- a generally horizontal, rectangular frame with opposed sides and opposed ends;
- two first ground-engaging members at a first end of said frame and two second ground-engaging members at an opposite, second end thereof;
- first suspension means, supportingly mounted between said frame and said first ground-engaging members, and comprising first oscillation means for accomplishing movement of one first ground-engaging member in opposition to the movement of the other first ground-engaging member; and
- second suspension means, supportingly mounted between said frame and said second ground-engaging members, and comprising second oscillation means for accomplishing movement of one second ground-engaging member in opposition to the movement of the other second ground-engaging member.

This stabilizing method comprises the steps of:
- verifying by using sensor means (9') whether the vertical projection of the centre of gravity of the utility vehicle lies in the vicinity of the first ground-engaging members or of the second ground-engaging members; and, when such condition has been found
- inhibiting free operation of the oscillation means of the members in which vicinity said projection lies; and
- enabling free operation of the oscillation means of the other members.

A utility vehicle in accordance with the present invention will now be described in greater detail, by way of example, with reference to the accompanying drawings, in which:
Figure 1 is a schematic side view of a grape harvester, comprising a frame, sustained by four hydraulic cylinders, to which the wheels are attached;
Figure 2 is a schematic front view of the grape harvester of Figure 1;
Figure 3 is a hydraulic and electrical scheme of a control system for the hydraulic cylinders, showing fluid flow during uphill travel;
Figure 4 is a diagram of the frame and the wheels of the grape harvester; and
Figure 5 is a scheme similar to Figure 3, showing fluid flow during downhill travel.

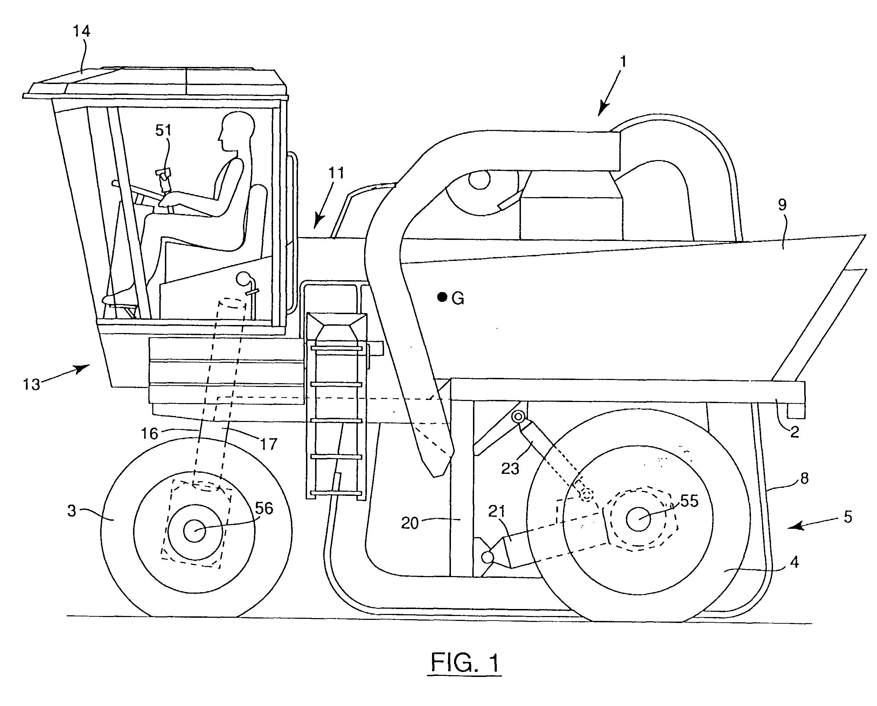

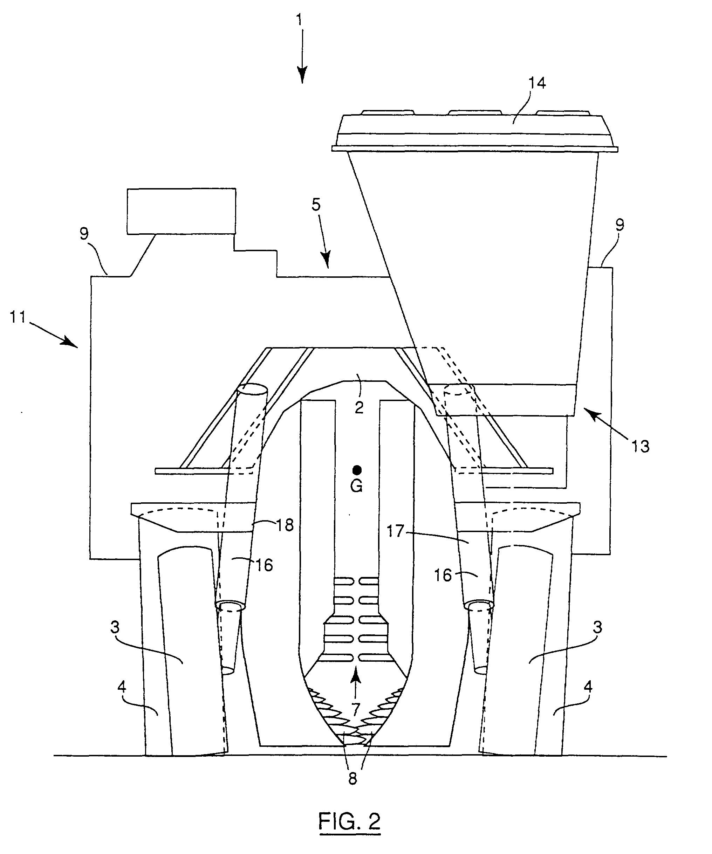

The utility vehicle shown in Figures 1 and 2 is a grape harvester, generally indicated by 1 and comprising a chassis or main frame 2, provided with front steerable wheels 3 and rear wheels 4. Both the front wheels 3 and the rear wheels 4 are driven for moving the frame 2 over the ground. The frame 2 is in the form of a gantry for straddling a row of plants, such as grape-vines. In known manner, the frame 2 carries a harvesting assembly 5, comprising a shaker assembly 7 for detaching the grapes from the vines and two elevator conveyors 8 for collecting the detached grapes and conveying them to two storage tanks 9 on the sides of vehicle 1. The frame 2 further carries an engine 11, providing the rotational power necessary to drive the various active members of the harvesting assembly 5 and also providing motive power to the wheels 3, 4, since the vehicle 1 is of the self-propelled type.

The harvesting assembly 5 may be fixed in a permanent manner to the main frame 2 of the machine, or else, it may be made in the form of a removable assembly which is detachably affixed to the main frame 2, so as to be capable of being replaced by other equipment or accessories, such as spraying and pruning equipments, equipment for tilling the ground, etc.

The driving and harvesting functions of the vehicle are controlled by the operator from an operator's platform 13, which is attached to the front portion of the frame 2 above the left steering wheel 3. To increase the comfort of the operator, an environmentally insulated cab 14 is provided which surrounds the operator's platform 13.

Support columns 16 extend downwardly from each side of the forepart of the main frame 2. The columns 16 comprise hydraulic actuator means in the form of double-acting hydraulic rams or cylinders 17, 18. The front wheels 3 are rotatably mounted to the rod ends of the hydraulic cylinders 17, 18 and can be turned left or right about the axis of the columns 16 by steering means (not shown). Extension of the left cylinder 17 or right cylinder 18, raises the respective front side of the frame 2.

A pair of substantially vertical frame members 20 is welded on both sides of the vehicle 1 to the underside of the frame 2. A pair of rearwardly extending arms 21, to which the rear wheels 4 are rotatably mounted, is pivotably attached to the lower portion of the vertical frame members 20. The position of the arms 21 and hence of the wheels 4 is also controlled by hydraulic actuator means in the form of double-acting hydraulic cylinders 23, 24. The rod ends of these rear cylinders 23, 24 are pivotably mounted to the arms 21, while their head ends are equally pivotably mounted to the frame 2. Extension of the rear left cylinder 23 or rear right cylinder 24, raises the respective rear side of the frame 2.

The vehicle 1 may have an elevated centre of gravity G, because its has to straddle the grape-vines and heavy parts, such as the engine 11 and the storage tanks 9 (when full) are mounted generally above the main frame 2.

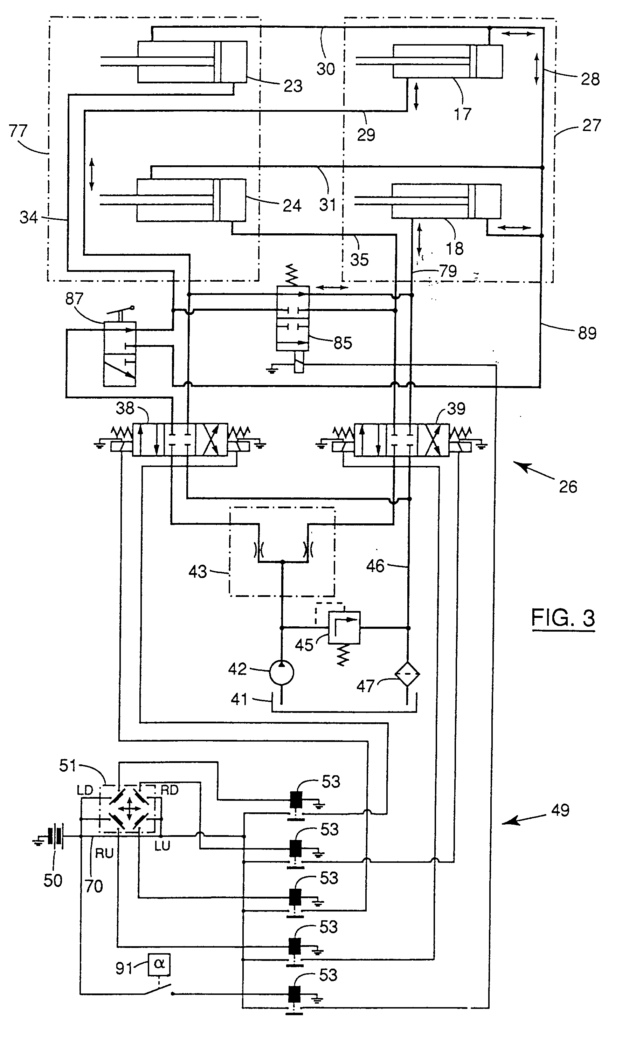

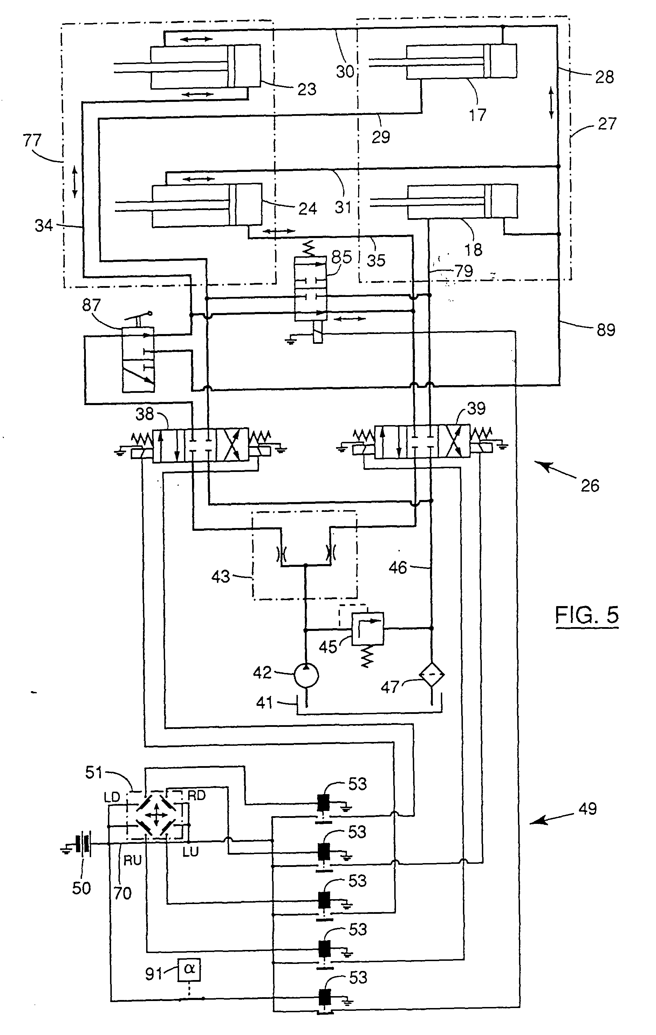

A control system 26, 49 for the hydraulic actuator means is illustrated in Figures 3 and 5. It comprises hydraulic control means 26, which are linked to the double-acting hydraulic cylinders 17, 18, 23, 24 for extension and retraction thereof.

The head end chambers of the left and right front cylinders 17, 18 are interconnected by an upper oscillation line 28. A lower oscillation line is constituted by two hydraulic line portions 29, 79, which are linked to two ports of an oscillation control valve 85, being a solenoid operated control valve with four ports and two positions and having a rest position shown in Fig. 3, wherein these line portions 29, 79 are interconnected. The cylinders 17, 18 and the lines 28, 29, 79 constitute an oscillation structure 27 for the front wheels 3. Herein the weight of the front end of the main frame 2 is supported by the oil enclosed in the head end chambers of the front cylinders 17, 18 and the upper oscillation line 28. When external action on the rod of the left front cylinder 17 makes the same extend or retract, oil will freely circulate through the oscillation lines 28, 29, 79 between the front cylinders 17, 18, such that the right front cylinder 18 is retracted or extended in the opposite sense. External action on the right front cylinder 18 has an analogous effect on the left front cylinder 17. As these cylinders 17, 18 have equal dimensions, the wheels 3 at the ends thereof are moved with an equal amount, as if they were mounted on an axle 56 which is articulately connected to the front of the frame 2.

The head end chambers of the left and right front cylinders 17, 18 are also connected by a left and a right elevation line 30, 31 to the rod end chambers of the respective left and right rear cylinders 23, 24, so that a movement of a piston of one of the rear cylinders 23 or 24 engenders a similar movement of the piston of the corresponding front cylinder 17 or 18 in a master-slave configuration. The dimensions of the rods and the cylinder bodies have been calculated as to make the front and the rear portions on the same side of the frame 2 rise or fall with an equal amount, so that the complete side is moved up or down in a parallel way.

The head end chamber of the rear left cylinder 23 is linked by a left control line 34 to an end levelling valve 87, which is a manually operated control valve with three ports and two positions. In its lower position as shown in Figures 3 and 5, the valve 87 connects the left control line 34 to a left, solenoid operated control valve 38 with four ports and three positions. Another port of the left control valve 38 is connected through the lower oscillation line portion 29 to the rod end of the front left cylinder 17. In its upper position (not shown) the end levelling valve 87 connects the inlet port of the left control valve 38 to an end levelling line 89 which is linked to the upper oscillation line 28.

The head end chamber of the rear right cylinder 24 is linked by a right control line 35 to a right, solenoid operated control valve 39 with four ports and three positions. Another port of this valve 39 is connected through the lower oscillation line portion 79 to the rod end chamber of the front right cylinder 18. The left and right control lines 34, 35 are also connected to the oscillation control valve 85, which inhibits oil circulation between these lines 34, 35 when not actuated.

When the left and right control valves 38, 39 are in their rest positions, the ports thereof are closed. When the oscillation control valve 85 is equally in its rest position, the oil in the left and right control lines 34, 35 cannot escape, such that the pistons of the rear cylinders 23, 24 are blocked by the oil trapped in their head end chambers. Any upward or downward movement of the rear wheels 4 relative to the frame 2 is impeded, as if they were mounted onto a fixed rear axle 55.

Hence, when the vehicle 1 is travelling over uneven ground, the vertical position of the frame 2 is defined by the rear wheels 4, while the front wheels 3 are permitted to move up or down in order to remain in constant engagement with the ground, even when pits or bumps are encountered. As ground contact is secured for all wheels 3, 4, none of them can start to spin freely and no consequent loss of traction power can occur.

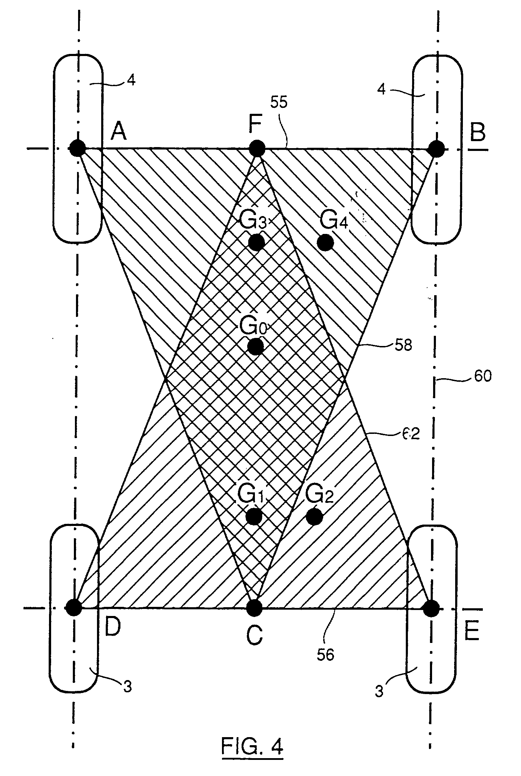

As illustrated in Figure 4, the condition for static stability of the vehicle 1 is that the vertical projection Gᵢ of its centre of gravity G falls within the polygon of its rest points. Under the conditions described above, the rest points at the rear end of the vehicle 1 are defined by the undersides A and B of the rear wheels 4. The virtual axle 55, which passes through the centres of the rear wheels 4, is secured to the frame 2. At the front end of the vehicle 1, the undersides D and E of the front wheels 3 do not constitute fixed rest points, as they are permitted to move relatively to the frame 2, but as their movements are mutually linked by the oscillation structure 27, the virtual axle 56, which passes through the centres of the front wheels, oscillates as if it was attached to an articulation point C which is affixed to the front end of the vehicle 1. Hence, the stability polygon 58 is constituted by the triangle ABC.

As shown in Figure 5, the oscillation control valve 85 may be actuated to disconnect the lower oscillation line portions 29, 79 and to interconnect the left and right control lines 34, 35. When the left and right control valves 38 and 39 are kept in their rest positions, the pistons of the front cylinders 17, 18 are immobilized by the oil trapped in their rod end chambers and the corresponding line portions 29, 79. Hence the front wheels 3 and their virtual axle 56 are kept in a fixed position to the main frame 2.

Concurrently, oil may flow freely between the head end chambers of the rear cylinders 23, 24 through the control lines 34, 35. The rod end chambers of the same cylinders 23, 24 remain interconnected through the elevation lines 30, 31 and the oscillation line 28. The hydraulic cylinders 23, 24 and the lines 28, 30, 31, 34 constitute an oscillation structure 77 for the rear wheels 4, akin to the oscillation structure 27 for the front wheels 3. The weight of the rear end of the main frame 2 is born by the oil enclosed in the head end chambers of the rear cylinders 23, 24 and the control lines 34, 35. When external action on the rod of the rear left cylinder 23 makes the same extend or retract, oil will freely flow through the control lines 34, 35, so that the rear right cylinder 24 is retracted or extended in the opposite sense. External action on the rear right cylinder 24 has an analogous effect on the rear left cylinder 23. As these cylinders 23, 24 have equal dimensions, the wheels 3 at the rod ends thereof are moved with an equal amount, such that their virtual axle 55 oscillates, as if it was connected at an articulation point F at the rear end of the frame 2.

Under these conditions the vertical position of the frame 2 is defined by the front wheels 3, while the rear wheels 4 are permitted to move up or down in order to remain in constant engagement with the ground, even when pits or bumps are encountered. As ground contact is still secured for all wheels 3, 4, none of them can start to spin freely and no consequent loss of traction power can occur.

However, the original stability polygon 58 of the vehicle 1 has been replaced with a new stability polygon 62. The rest points at the front end of the vehicle 1 are now defined by the undersides D and E of the front wheels 3. Their virtual axle 56 is secured to the frame 2. At the rear end of the vehicle 1, the undersides D and E of the front wheels 3 do no longer constitute fixed rest points, as their virtual axle 56 oscillates as if it was attached to the articulation point F, fixed to the rear end of the vehicle 1. Hence, the new stability polygon 62 is constituted by the triangle DEF.

The hydraulic control means 26 further comprise a gear pump 42, which is driven by the engine 11 and takes oil from an oil tank 41 for delivery to an oil flow divider 43, which in turn delivers the pressurized oil to the left and right control valves 38, 39. The oil pressure is controlled in a conventional manner by a pressure relief valve 45, installed between the pump 42 and a return line 46, which delivers the oil back to the tank 41 through an oil filter 47.

The control valves 38, 39 and 85 are steered by means of electrical command means 49, comprising a battery 50, a manually controlled multi-functional switch 51 with four contacts RD, RU, LD, LU, a sensor 91 and electrical circuitry connected to the solenoids of said valves 38, 39 and 85. In a conventional manner, the switch 51 and the sensor 91 are not directly linked to the valves 38, 39, but command a set of relays 53, which are connected to the battery 50 via a primary plus line 70. Their aim is to prevent the burning of the contacts of the switch 51 and the sensor 91 by the actuating current of the valve solenoids.

The sensor 91 is a sensor capable of detecting conditions in which the vertical projection Gᵢ of the centre of gravity G shifts from the front wheels 3 to the rear wheels 4 and vice versa. This may be a sensor 91 which senses the inclination α of the frame 2 to the horizontal in the longitudinal direction of the harvester 1. The output from the sensor 91 opens the electrical circuitry to the oscillation control valve 85 when the harvester 1 is travelling along a substantially horizontal or uphill path, and closes the same when the harvester 1 is travelling along a downhill path. Such sensor 91 may be realized by a balanced, oil dampened lever which engages one or more electrical contacts or by more sophisticated apparatus, involving electronics and strain gauges or photo-electrical cells.

When the harvester 1 is travelling on level ground, the solenoid of the oscillation control valve 85 is not actuated as shown in Fig. 3. When no levelling command is given via the multifunctional switch 51, the left and right control valves 38, 39 are equally in their rest positions and fix the rear wheels 4 to the frame 2, while the front cylinders 17, 18 are permitted to extend and retract in opposition to each other.

The vertical projection G₀ of the centre of gravity G of the harvester 1 lies well within the stability triangle ABC, such that small pits or bumps encountered by the rear wheels 4 may tilt the frame 2 sideways without harm to the overall stability of the harvester 1.

When the harvester is travelling along an uphill path the projection of gravity centre G shifts to a new location G₃, closer to the triangle base AB. The stability margin, defined by the smallest of the distances of the projection Gᵢ to either of the triangle sides BC or AC, has even improved such that the frame 2 may tilt sideways and the projection of G may shift to G₄ without immediate risk of the harvester 1 turning over.

Otherwise, when the harvester 1 is travelling down a steep hill with its rear end at a higher level than its front end, the vertical projection of G is shifted in a forward direction towards G₁ and the stability margin to the triangle sides BC and AC becomes critical. A small sideways movement of the frame 2 would suffice to shift the projection to a location G₂ outside the stability polygon 58. In case the front wheels 3 would still behave as if they were mounted to an articulated axle 56, the harvester 1 would tip over completely, unless the operator reacted immediately by restoring the upright position of the frame 2.

However when the harvester path changes from uphill to downhill, the longitudinal inclination of the frame 2 changes and the sensor 91 closes the electrical circuitry to the solenoid of the oscillation control valve 85. The cylinders 17, 18 of the front wheels 3 are blocked and the rear wheels 4 are permitted to oscillate about the articulation point F, such that the triangle DEF now constitutes the effective stability polygon. The new stability margin is defined by the smallest of the distances of the projection Gᵢ to either of the triangle sides DF or EF. Hence the location of the vertical projection of G at G₁ or even G₂ still presents very good stability characteristics as these points lie well within the stability polygon 62. Small variations in the sideways inclination as caused by ground unevenness will not make the vertical projection cross the borderlines of the polygon 62, such that there is no substantial risk of the harvester 1 tipping over.

When the harvester 1 returns to level terrain or starts travelling uphill again, the signal from the sensor 91 releases the oscillation control valve 85 thereby fixing the vertical position of the rear wheels 4 and permitting oscillatory movement of the front wheels 3 to the frame 2. The original stability triangle ABC has become effective again, such that the stability margin is optimized, without loss of traction power as all wheels 3, 4 are kept in firm engagement with the ground.

The control system 26, 49 equally comprises means for adjusting the position of the frame 2 to the ground. Besides the rest position in which no contacts are closed, the lever of the multifunctional switch 51 has four operative positions in each of which two adjacent contacts are closed. The operator thereby commands sideways and vertical movement of the frame 2.

When the contacts LD and RD are closed, both control valves 38, 39 are shifted to the left, such that pressurized oil is supplied to the rod end chambers of both front cylinders 17, 18. The oil from their head end chambers flows via the left and right elevation lines 30 and 31 to the rod ends of the corresponding rear cylinders 23, 24, while the head end chambers of the latter are connected via the left and right control lines 34, 35 and the control valves 38, 39 to the return line 46. As a result, all four hydraulic cylinders 17, 18, 23, 24 retract simultaneously and both sides of the frame 2 are lowered concurrently.

Otherwise, when the contacts RU and LU are closed, both control valves 38, 39 are shifted to right for supplying pressurized oil to the head end chambers of both rear cylinders 23, 24. The oil from their rod end chambers flows via the elevation lines 30, 31 to the head ends of the corresponding front cylinders 17, 18, while the rod ends of the latter are connected via the articulation line portions 29, 79 and the control valves 38, 39 to the return line 46. As a result, all four cylinders 17, 18, 23, 24 extend simultaneously and both sides of the frame 2 are raised concurrently.

These operations, which may be used to adjust the harvesting assembly 5 to the height of the vines, do not involve an oil flow through the oscillation control valve 85, such that the state of the latter does not affect the levelling operations. The frame 2 may be raised or lowered irrespective of its longitudinal inclination, such that these operations may be performed equally during uphill or downhill travelling.

When the operator closes contacts LD and RU, the left control valve 38 is shifted to the left and the right control valve 39 is shifted to the right. Pressurized oil is supplied to the rod end chamber of the front left cylinder 17 and the head end of the rear right cylinder 24, while the head end of the rear left cylinder 23 and the rod end of the front left cylinder 18 are connected to the return line 46. The rear right cylinder 24 extends and provides an oil flow from its rod end via the right elevation line 31 to the head end of the front right cylinder 18, which has to extend equally, such that the right side of the frame 2 is lifted up in a parallel way.

Meanwhile, oil flows from the head end of the rear left cylinder 23 to the return line 46 and from the head end of the front left cylinder 17 via the left elevation line 30 to the rod end of the rear left cylinder 23. Both left cylinders 17, 23 retract simultaneously and the left side of the frame 2 is lowered in a parallel way. As a result, the frame 2 is tilted sideways to the left, but the height of the centre of the frame 2 is substantially maintained.

In a completely analogous manner, the closing of the contacts RD and LU causes the extension of the left cylinders 17, 23, and the retraction of the right cylinders 18, 24, such that the left side of the frame 2 is lifted up and the right side is lowered. In consequence, the frame 2 is tilted sideways to the right, but the height of its centre is equally substantially maintained.

These sideways movements may be used to return the harvester 1 to an upright position when harvesting on lateral slopes. These operations are equally not influenced by the position of the oscillation control valve 85, such that the operator may level the frame 2 irrespective of the longitudinal inclination of the slope.

It may be required to adjust the longitudinal inclination of the frame 2 itself, e.g. to compensate for oil leaks in one or other of the hydraulic cylinders 17, 18, 23, 24. The operator who wants to level the harvester 1 lengthwise, manually lifts the end levelling valve 87 into its upper position, thereby linking the end levelling line 89 to the left control valve 38. When the operator now closes contacts LU and RU of the multifunctional switch 51, the left and right control valves 38, 39 shift to the right and pressurized oil is fed via the end levelling line 89 and the oscillation line 28 to the head ends of the front cylinders 17, 18. Simultaneously, their rods ends are linked via the line portions 29, 79 to the return line 46, such that the front cylinders 17, 18 extend accordingly.

The left control line 34 is blocked by the end levelling valve 87 and the oscillation control valve 85, when the latter is in its rest position. Hence the rear left cylinder 23 is blocked also. The rod end and head end chambers of the rear right cylinder 24 are pressurized simultaneously by the oil from the right control line 35 on the one hand, and from the lines 89 and 31 on the other hand. Consequently this right cylinder 24 has no particular tendency to extend or retract. As both rear cylinders 23, 24 are immobilized, the rear end of the frame 2 does not rise or descend, while its front end is being raised by the front cylinders 17, 18.

To lower the front end of the frame 2, the operator holds the end levelling valve 87 into its upper position and shifts the lever on switch 51 to close contacts LD and RD. The control valves 38, 39 shift to the left such that oil from the end level line 89 and the head ends of the front cylinders 17, 18 can drain via the end levelling line 89 to the tank 41. Meanwhile pressurized oil is fed via the line portions 29, 79 to the rod end chambers of the same cylinders 17, 18, which retract accordingly.

The left rear cylinder 23 is blocked by the valves 87 and 85 as described above. Both chambers of the right rear cylinder 24 are now linked to the return line 46, such that there is no particular tendency to extend or retract for this cylinder 24. As both rear cylinders 23, 24 are immobilized once more, the rear end of the frame 2 does not rise or descend, while its front end is lowered by the action of the front cylinders 17, 18.

Consequently, the operator has the means to raise or lower only one end of the frame 2, while the oscillation control valve 85 is in its rest position. An analogous result is equally obtained when this valve 85 is actuated as shown in Fig. 5, i.e. during downhill travel.

Other embodiments of the present invention can be thought of without departing from the original idea of the invention. For example, a pair or all of the wheels 3, 4 may be replaced with other ground-engaging members, such as tracks or sledges. The hydraulic actuator means may comprise hydraulic motors for extending or retracting mechanical spindles in order to level the vehicle 1. The control system 26, 49 can also comprise an automatic levelling system, which senses the transverse inclination of the frame 2 and actuates the control valves 38, 39 in response thereto. The transverse inclination may be measured by means of a mechanical pendulum or an electronic inclinometer. The hydraulic control means 26 may equally comprise a by-pass valve, which directs the oil from the oil pump 42 immediately to the return line 46. When pressurized oil is needed at the control valves 38, 39, the by-pass valve is closed and oil pressure is built up until the relief valve 45 opens.

Although this invention has been described in use on a grape harvester, it can also advantageously be installed on other straddling vehicles such as vineyard tractors, vineyard spraying machines, coffee harvesters, etc.

It will be appreciated that, according to the invention, means are provided for improving the stability of a utility vehicle 1, which is travelled along and across slopes. Oscillation control means are provided for adapting the stability polygon 58, 62 to the configuration which is most suited for the vertical projection Gᵢ of the centre of gravity G, such that the risks for tipping over are minimized, while firm ground contact remains guaranteed for all wheels.

## Claims

1. A utility vehicle (1) comprising:
- a generally horizontal, rectangular frame (2) with opposed sides and opposed ends;
- two first ground-engaging members (3) at a first end of said frame (2) and two second ground-engaging members (4) at an opposite, second end thereof;
- first suspension means, supportingly mounted between said frame (2) and said first ground-engaging members (3) and comprising first oscillation means (27) for accomplishing movement of one first ground-engaging member (3) in opposition to the movement of the other first ground-engaging member (3);
- second suspension means, supportingly mounted between said frame (2) and said second ground-engaging members (4) comprising second oscillation means (77) for accomplishing movement of one second ground-engaging member (4) in opposition to the movement of the other second ground-engaging member (4); and
- suspension control means (26, 49), comprising:
first oscillation control means (85), operatively linked to said first oscillation means (27) and changeable between an enabling and an inhibiting state, wherein said movement of the first ground-engaging members (3) is permitted and obstructed respectively; and
second oscillation control means (85), operatively linked to said second oscillation means (77) and changeable between an enabling and an inhibiting state, wherein said movement of the second ground-engaging members (4) is permitted and obstructed respectively,
**characterized in that**:
said first and second oscillation control means (85) are linked to prevent a simultaneous enabling state in both the first and the second oscillation control means (85); and
said suspension control means (26, 49) further comprise a sensor (91), sensing a variable indicative of the relative position of the vertical projection (Gi) of the centre of gravity (G) of the utility vehicle (1) with respect to the first and second ground-engaging members (3, 4) and generating an output which is used in changing the state of the first and the second oscillation control means (85).

2. A utility vehicle according to claim 1, **characterized in that**:
when said vertical projection (Gi) lies in the vicinity of said first ground-engaging members (3), the first oscillation control means (85) are set in the oscillation inhibiting state and the second oscillation control means (85) in the oscillation enabling state; and
when said vertical projection (Gi) lies in the vicinity of said second ground-engaging members (4), the second oscillation control means are set in the oscillation inhibiting state and the first oscillation control means in the oscillation enabling state.

3. A utility vehicle according to claim 1 or 2, **characterized in that** said sensor (91) senses the inclination of the frame (2) in the direction from said first end to said second end.

4. A utility vehicle according to any of the preceding claims, **characterized in that**:
said first suspension means comprise two first hydraulic actuator means (17, 18) and said second suspension means comprise two second hydraulic actuator means (23, 24);
said first oscillation means (27) comprise a first hydraulic oscillation line (29, 79) interconnecting said first hydraulic actuator means (17, 18);
said second oscillation means (77) comprise a second hydraulic oscillation line (34, 35) interconnecting said second hydraulic actuator means (22, 23); and
said first and second suspension control means comprise hydraulic valve means (85) operable to break said first and second hydraulic line (29, 79 and 34, 35) respectively.

5. A utility vehicle according to claim 4, **characterized in that**:
said first hydraulic actuator means and said second hydraulic actuator means are first and second hydraulic cylinders (17, 18 and 23, 24), having head end and rod end chambers;
said first hydraulic oscillation line (29, 79) interconnects the rod end chambers of the first hydraulic cylinders (17, 18) and said second hydraulic oscillation line (34, 35) interconnects the head end chambers of the second hydraulic cylinders (23, 24).

6. A utility vehicle according to claim 4 or 5, **characterized in that** said hydraulic valve means comprise a single 4/2 valve (85) connected to both the first and second hydraulic line (29, 79 and 34, 35).

7. A utility vehicle according to claim 6, when appended to claim 3, **characterized in that** said 4/2 valve (85) is controlled by a solenoid, commanded by said inclination sensor (91).

8. A utility vehicle according to any of the preceding claims, **characterized in that** said suspension control means (26, 49) further comprise levelling means for changing the position of said first ground-engaging members (3) and said second ground-engaging members (4) with respect to said frame (2) in order to vary the height and/or the inclination of said frame (2) with respect to the ground.

9. A utility vehicle according to claim 8, when appended to any of the claims 4 to 7, **characterized in that** said levelling means comprise hydraulic circuitry (26) linked on the one hand to said first hydraulic actuator means (17, 18) and second hydraulic actuator means (22, 23), and on the other hand via further hydraulic valve means (38, 39) to a source (42) of pressurized oil and a drain (46).

10. A utility vehicle according to claim 9, **characterized in that**:
said further valve means (38, 39) comprises a first side levelling valve (38), linked to a first hydraulic actuator means (17) and a second hydraulic actuator means (23) on one side of the frame (2), and a second side levelling valve (39), linked to the other first hydraulic actuator means (18) and the other second actuator means (24) on the other side of said frame (2); and
said levelling means further comprise command means (51) for simultaneous actuation of both the first and the second side levelling valves (38 and 39) to vary the sideways inclination of the frame (2) or the total height of the frame (2).

11. A utility vehicle according to claim 10, **characterized in that**:
said first and second side levelling valves (38 and 39) are solenoid controlled 3/4 valves and said command means (51) comprise a closing contact for each solenoid of said side levelling valves (38, 39); and
said command means (51) further comprises a lever for simultaneous closing of two adjacent contacts.

12. A utility vehicle according to any of the claims 8 to 11, **characterized in that** said levelling means comprise end levelling means for varying the inclination of the frame (2) in the direction from said first end to said second end.

13. A utility vehicle according to claim 12, when appended to claim 10 or 11, **characterized in that** said end levelling means comprise a hydraulic end levelling valve (87) incorporated into said hydraulic circuitry (26) such that actuation of said valve (87) enables movement of either the first actuator means (17, 18) or the second actuator means (23, 24) by actuation of one of said side levelling valves (38/39), while said end levelling valve (87) inhibits movement of at least one of the second, respectively first actuator means (23, 24 / 17, 18).

14. A utility vehicle according to any of the preceding claims, **characterized in that** said vehicle has a straddler frame (2) and comprises a grape harvesting unit (5).

15. A method for stabilizing a utility vehicle which comprises:
- a generally horizontal, rectangular frame (2) with opposed sides and opposed ends;
- two first ground-engaging members (3) at a first end of said frame (2) and two second ground-engaging members (4) at an opposite, second end thereof;
- first suspension means, supportingly mounted between said frame (2) and said first ground-engaging members (3), and comprising first oscillation means (27) for accomplishing movement of one first ground-engaging member (3) in opposition to the movement of the other first ground-engaging member (3); and
- second suspension means, supportingly mounted between said frame (2) and said second ground-engaging members (4), and comprising second oscillation means (77) for accomplishing movement of one second ground-engaging member (4) in opposition to the movement of the other second ground-engaging member (4),
said method comprising the steps of:
- verifying by using sensor means (91) whether the vertical projection (Gi) of the centre of gravity (G) of the utility vehicle lies in the vicinity of the first ground-engaging members (3) or of the second ground-engaging members (4); and, when such condition has been found:
- inhibiting free operation of the oscillation means (27/77) of the members (3/4) in the vicinity whereof said projection (Gi) lies; and
- enabling free operation of the oscillation means (77/27) of the other members (4/3).

16. A method according to claim 15, **characterized in that** the verifying step comprises the substeps of:
- sensing the inclination of the frame (2) in the direction from said first end to said second end; and
- generating one signal when said frame has an upward inclination; or
- generating another signal when said frame has a downward inclination.

17. A method according to claim 16, **characterized in that**:
the inhibiting step comprises changing the state of an oscillation control means (85), operatively linked to said oscillation means (27/77); and
the enabling step comprises changing the state of an oscillation control means (85), operatively linked to the other oscillation means (77/27).

18. A method according to claim 17, **characterized in that** the one and the other oscillation control means (85) are linked to inhibit a simultaneous enabling state in the oscillation control means (85) of both oscillation means (27, 77).

19. A method according to any of the claims 16 to 18, **characterized in that**:
said verifying step is repeated constantly; and
said inhibiting and enabling steps are executed automatically whenever said vertical projection (Gi) has shifted from the vicinity of the first ground-engaging members (3) to the vicinity of the second ground-engaging members (4) or vice versa.

20. A method according to any of the claims 16 to 19, **characterized by** the further steps of:
- verifying the inclination of the frame (2) in the direction from the one side to the other side; and
- operating suspension control means (26, 49) operatively linked to said first and second suspension means for maintaining the frame (2) in a level position in said direction from the one side to the other.

## Patentansprüche

1. Nutzfahrzeug (1) mit:
- einem allgemein horizontalen rechtwinkligen Rahmen (2) mit gegenüberliegenden Seiten und gegenüberliegenden Enden,
- zwei ersten mit dem Boden in Eingriff kommenden Teilen (3) an einem ersten Ende des Rahmens (2) und zwei zweiten mit dem Boden in Eingriff kommenden Teilen (4) an einem gegenüberliegenden zweiten Ende des Rahmens,
- ersten Aufhängungseinrichtungen, die unter Abstützung zwischen dem Rahmen (2) und den ersten mit dem Boden in Eingriff kommenden Teilen (3) befestigt sind und erste Schwingungseinrichtungen (27) zur Ausführung einer Bewegung eines der ersten mit dem Boden in Eingriff kommenden Teile (3) entgegengesetzt zur Bewegung des anderen der ersten mit dem Boden in Eingriff kommenden Teile (3) umfassen,
- zweiten Aufhängungseinrichtungen, die unter Abstützung zwischen dem Rahmen (2) und den zweiten mit dem Boden in Eingriff kommenden Teilen befestigt sind und zweite Schwingungseinrichtungen (77) zur Ausführung einer Bewegung eines der zweiten mit dem Boden in Eingriff kommenden Teile (4) entgegengesetzt zur Bewegung des anderen der zweiten mit dem Boden in Eingriff kommenden Teile (4) umfassen, und
- Aufhängungs-Steuereinrichtungen (26, 49), die folgendes umfassen:
erste Schwingungssteuereinrichtungen (85), die betriebsmäßig mit den ersten Schwingungseinrichtungen (27) verbunden und zwischen einem Freigabe- und einem Sperrzustand änderbar sind, in denen die Bewegung der ersten mit dem Boden in Eingriff kommenden Teile zugelassen bzw. verhindert ist, und
zweite Schwingungssteuereinrichtungen (85), die betriebsmäßig mit den zweiten Schwingungseinrichtungen (77) verbunden und zwischen einem Freigabe- und einem Sperrzustand änderbar sind, in denen die Bewegung der zweiten mit dem Boden in Eingriff kommenden Teile (4) zugelassen bzw. verhindert wird,
**dadurch gekennzeichnet, daß**:
die ersten und zweiten Schwingungssteuereinrichtungen (85) miteinander verbunden sind, um einen gleichzeitigen Freigabezustand sowohl in den ersten als auch den zweiten Schwingungssteuereinrichtungen (85) zu verhindern, und
die Aufhängungs-Steuereinrichtungen (26, 49) weiterhin einen Sensor (91) umfassen, der eine Variable mißt, die die relative Position der vertikalen Projektion (Gᵢ) des Schwerpunktes G des Nutzfahrzeuges (1) bezüglich der ersten und zweiten mit dem Boden in Eingriff kommenden Teile (3, 4) anzeigt, und der ein Ausgangssignal erzeugt, das bei der Änderung des Zustandes der ersten und zweiten Schwingungssteuereinrichtungen (85) verwendet wird.

2. Nutzfahrzeug nach Anspruch 1, **dadurch gekennzeichnet, daß**:
wenn die vertikale Projektion (G;) in der Nähe der ersten mit dem Boden in Eingriff kommenden Teile (3) liegt, die ersten Schwingungssteuereinrichtungen (85) auf den eine Schwingung sperrenden Zustand eingestellt werden, während die zweiten Schwingungssteuereinrichtungen (85) auf den eine Schwingung ermöglichenden Zustand eingestellt werden, und
wenn die vertikale Projektion (Gᵢ) in der Nähe der zweiten mit dem Boden in Eingriff kommenden Teile (4) liegt, die zweiten Schwingungssteuereinrichtungen auf den eine Schwingung sperrenden Zustand eingestellt werden, während sich die ersten Schwingungssteuereinrichtungen auf den eine Schwingung ermöglichenden Zustand eingestellt werden.

3. Nutzfahrzeug nach Anspruch 1 oder 2, **dadurch gekennzeichnet, daß** der Sensor (91) die Neigung des Rahmens (2) in der Richtung von dem ersten Ende zu dem zweiten Ende mißt.

4. Nutzfahrzeug nach einem der vorhergehenden Ansprüche, **dadurch gekennzeichnet, daß**:
die ersten Aufhängungseinrichtungen zwei erste hydraulische Stellgliedeinrichtungen (17, 18) umfassen, und daß die zweiten Aufhängungseinrichtungen zwei zweite hydraulische Stellgliedeinrichtungen (23, 24) umfassen,
die ersten Schwingungseinrichtungen (27) eine erste hydraulische Schwingungsleitung (29, 79) umfassen, die die ersten hydraulischen Stellgliedeinrichtungen (17, 18) miteinander verbindet,
die zweiten Schwingungseinrichtungen (77) eine zweite hydraulische Schwingungsleitung (34, 35) umfassen, die die zweiten hydraulischen Stellgliedeinrichtungen (22, 23) miteinander verbindet, und
die ersten und zweiten Aufhängungs-Steuereinrichtungen Hydraulikventileinrichtungen (85) umfassen, die zum Unterbrechen der ersten bzw. zweiten Hydraulikleitung (29, 79 bzw. 34, 35) betätigbar sind.

5. Nutzfahrzeug nach Anspruch 4, **dadurch gekennzeichnet, daß**:
die ersten hydraulischen Stellgliedeinrichtungen und die zweiten hydraulischen Stellgliedeinrichtungen erste und zweite Hydraulizylinder (17, 18 und 23, 24) sind, die zylinderseitige und kolbenstangenseitige Kammern aufweisen,
die erste hydraulische Schwingungsleitung (29, 79) die kolbenstangenseitigen Kammern der ersten Hydraulikzylinder (17, 18) miteinander verbindet, und die zweite hydraulische Schwingungsleitung (34, 35) die zylinderseitigen Kammern der zweiten Hydraulikzylinder (23, 24) miteinander verbindet.

6. Nutzfahrzeug nach Anspruch 4 oder 5 **dadurch gekennzeichnet, daß** die Hydraulikventileinrichtungen ein einziges 4/2-Ventil (85) umfassen, das sowohl mit der ersten als auch mit der zweiten hydraulischen Leitung (29, 79 und 34, 35) verbunden ist.

7. Nutzfahrzeug nach Anspruch 6 unter Rückbeziehung auf Anspruch 3, **dadurch gekennzeichnet, daß** das 4/2-Ventil (85) durch eine Magnetspule gesteuert ist, die Befehle von dem Neigungssensor (91) empfängt.

8. Nutzfahrzeug nach einem der vorhergehenden Ansprüche, **dadurch gekennzeichnet, daß** die Aufhängungs-Steuereinrichtungen (26, 49) weiterhin Nivelliereinrichtungen zum Ändern der Position der ersten mit dem Boden in Eingriff kommenden Teile (3) und der zweiten mit dem Boden in Eingriff kommenden Teile (4) bezüglich des Rahmens (2) umfassen, um die Höhe und/oder die Neigung des Rahmens (2) gegenüber dem Boden zu ändern.

9. Nutzfahrzeug nach Anspruch 8 unter Rückbeziehung auf einen der Ansprüche 4-7, **dadurch gekennzeichnet, daß** die Nivelliereinrichtungen Hydraulikkreise (26) umfassen, die einerseits mit den ersten hydraulischen Stellgliedeinrichtungen (17, 18) und den zweiten hydraulischen Stellgliedeinrichtungen (22, 23) und andererseits über eine weitere Hydraulikventileinrichtung (38, 39) mit einer Quelle (42) für unter Druck stehendes Öl und einem Ablaß (46) verbunden sind.

10. Nutzfahrzeug nach Anspruch 9, **dadurch gekennzeichnet, daß**:
die weitere Ventileinrichtung (38, 39) ein erstes Seitennivellierventil (38), das mit einer ersten hydraulischen Stellgliedeinrichtung (17) und einer zweiten hydraulischen Stellgliedeinrichtung (23) auf einer Seite des Rahmens (2) verbunden ist, und ein zweites Seitennivellierventil (39) umfaßt, das mit der anderen ersten hydraulischen Stellgliedeinrichtung (18) und der anderen zweiten Stellgliedeinrichtung (24) auf der anderen Seite des Rahmens (2) verbunden ist, und
die Nivelliereinrichtungen weiterhin Befehlseinrichtungen (51) zur gleichzeitigen Betätigung beider der ersten und zweiten Seitennivellierventile (38) und (39) umfassen, um die seitliche Neigung des Rahmens (2) oder die Gesamthöhe des Rahmens (2) zu ändern.

11. Nutzfahrzeug nach Anspruch 10, **dadurch gekennzeichnet, daß** die ersten und zweiten Seitennivellierventile (38 und 39) magnetspulengesteuerte 3/4-Ventile sind und die Befehlseinrichtungen (51) einen schließenden Kontakt für jede Magnetspule der Seitennivellierventile (38, 39) umfassen, und
die Befehlseinrichtungen (51) weiterhin einen Hebel zum gleichzeitigen Schließen von zwei benachbarten Kontakten umfassen.

12. Nutzfahrzeug nach einem der Ansprüche 8-11, **dadurch gekennzeichnet, daß** die Nivelliereinrichtungen Enden-Nivelliereinrichtungen zur Änderung der Neigung des Rahmens (2) in der Richtung von dem ersten Ende zum zweiten Ende umfassen.

13. Nutzfahrzeug nach Anspruch 12, unter Rückbeziehung auf Anspruch 10 oder 11, **dadurch gekennzeichnet, daß** die Enden-Nivellierungeinrichtungen ein hydraulisches Endennivellierventil (87) umfassen, das in dem Hydraulikkreis (26) derart eingefügt ist, daß die Betätigung des Ventils (87) die Bewegung entweder der ersten Stellgliedeinrichtung (17, 18) oder der zweiten Stellgliedeinrichtung (23, 24) durch Betätigung eines der Seitennivellierventile (38/39) freigibt, während das Endennivellierventil (87) die Bewegung von zumindest einem der zweiten bzw. ersten Stellgliedeinrichtungen (23, 24 / 17, 18) verhindert.

14. Nutzfahrzeug nach einem der vorhergehenden Ansprüche, **dadurch gekennzeichnet, daß** das Fahrzeug ein Stelzfahrgestell (2) aufweist und eine Traubenernteeinheit (5) bildet.

15. Verfahren zur Stabilisierung eines Nutzfahrzeuges, das folgendes umfaßt:
- einen allgemein horizontalen rechtwinkligen Rahmen (2) mit gegenüberliegenden Seiten und gegenüberliegenden Enden,
- zwei erste mit dem Boden in Eingriff kommenden Teilen (3) an einem ersten Ende des Rahmens (2) und zwei zweite mit dem Boden in Eingriff kommenden Teilen (4) an einem gegenüberliegenden zweiten Ende des Rahmens,
- erste Aufhängungseinrichtungen, die abstützend zwischen dem Rahmen (2) und den ersten mit dem Boden in Eingriff kommenden Teilen (3) befestigt sind und erste Schwingungseinrichtungen (27) zum Ausführen einer Bewegung eines der ersten mit dem Boden in Eingriff kommenden Teile (3) entgegengesetzt zur Bewegung des anderen der ersten mit dem Boden in Eingriff kommenden Teile (3) umfassen, und
- zweite Aufhängungseinrichtungen, die abstützend zwischen dem Rahmen (2) und den zweiten mit dem Boden in Eingriff kommenden Teilen (4) angeordnet sind und zweite Schwingungseinrichtungen (77) zum Ausführen einer Bewegung eines zweiten der mit dem Boden in Eingriff kommenden Teile (4) entgegengesetzt zur Bewegung des anderen der zweiten mit dem Boden in Eingriff kommenden Teile (4) umfassen,
wobei das Verfahren die folgenden Schritte umfaßt:
- unter Verwendung von Sensoreinrichtungen (91), Überprüfung, ob die vertikale Projektion Gᵢ des Schwerpunktes G des Nutzfahrzeuges in der Nähe der ersten mit dem Boden in Eingriff kommenden Teile (3) oder der zweiten mit dem Boden in Eingriff kommenden Teile (4) liegt, und, wenn ein derartiger Zustand festgestellt wurde,
- Sperren des freien Betriebs der Schwingungseinrichtungen (72/77) der Teile (3/4), in deren Nähe die Projektion Gᵢ liegt, und
- Freigabe des freien Betriebs der Schwingungseinrichtungen (77/27) der anderen Teile (4/3).

16. Verfahren nach Anspruch 15, **dadurch gekennzeichnet, daß** der Überprüfungsschritt die folgenden Teilschritte umfaßt:
- Messung der Neigung des Rahmens (2) in der Richtung von dem ersten Ende zum zweiten Ende, und
- Erzeugen eines Signals, wenn der Rahmen eine nach oben gerichtete Neigung hat, oder
- Erzeugen eines anderen Signals, wenn der Rahmen eine nach unten gerichtete Neigung aufweist.

17. Verfahren nach Anspruch 16, **dadurch gekennzeichnet, daß**:
der Sperrschritt die Änderung des Zustandes einer Schwingungssteuereinrichtung (85) umfaßt, die betriebsmäßig mit den Schwingungseinrichtungen (27/77) verbunden ist, und
der Freigabeschritt die Änderung des Zustandes einer Schwingungssteuereinrichtung (85) umfaßt, die betriebsmäßig mit der anderen Schwingungseinrichtung (77/27) verbunden ist.

18. Verfahren nach Anspruch 17, **dadurch gekennzeichnet, daß** die einen und die anderen Schwingungssteuereinrichtungen (85) miteinander verbunden sind, um einen gleichzeitigen Freigabezustand in den Schwingungssteuereinrichtungen (85) beider Schwingungseinrichtungen (27/77) zu sperren.

19. Verfahren nach einem der Ansprüche 16-18, **dadurch gekennzeichnet, daß**:
der Überprüfungsschritt dauernd wiederholt wird, und
die Sperr- und Freigabeschritte automatisch jedesmal dann ausgeführt werden, wenn sich die vertikale Projektion Gᵢ von der Nähe der ersten mit dem Boden in Eingriff kommenden Teile (3) zur Nähe der zweiten mit dem Boden in Eingriff kommenden Teile (4) oder umgekehrt verschoben hat.

20. Verfahren nach einem der Ansprüche 16-19, **gekennzeichnet durch** die weiteren folgenden Schritte der:
- Überprüfung der Neigung des Rahmens (2) in der Richtung von der einen Seite zur anderen Seite, und
- Betätigung von Aufhängungs-Steuereinrichtungen (26, 49), die betriebsmäßig mit den ersten und zweiten Aufhängungseinrichtungen verbunden sind, um den Rahmen (2) in einer ebenen Position in der Richtung von der einen Seite zur anderen Seite zu halten.

## Revendications

1. Véhicule utilitaire (1), comprenant:
- un châssis rectangulaire (2) généralement horizontal avec des côtés opposés et des extrémités opposées;
- deux premiers organes de contact au sol (3) à une première extrémité dudit châssis (2) et des seconds organes (4) de contact au sol à sa seconde extrémité, opposée;
- des premiers moyens de suspension, montés pour soutenir entre ledit châssis (2) et lesdits premiers organes de contact au sol(3), et comprenant des premiers moyens d'oscillation (27) destinés à réaliser un mouvement d'un des premiers organes de contact au sol (3) en opposition avec le mouvement de l'autre premier organe de contact au sol(3);
- des seconds moyens de suspension, montés pour soutenir entre ledit châssis (2) et lesdits seconds organes (4) de contact au sol, comprenant des seconds moyens d'oscillation (77) destinés à réaliser un mouvement d'un des seconds organes (4) de contact au sol en opposition au mouvement de l'autre second organe (4) de contact au sol; et
- des moyens (26, 49) de contrôle de suspension, comprenant:
des premiers moyens (85) de contrôle de suspension, reliés fonctionnellement auxdits premiers moyens d'oscillation (27) et modifiables entre un état d'habilitation et un état d'inhibition dans lesquels ledit mouvement des premiers organes de contact au sol (3) est respectivement permis et empêché; et
des seconds moyens (85) de contrôle d'oscillation, reliés fonctionnellement auxdits seconds moyens (77) d'oscillation et modifiables entre un état d'habilitation et un état d'inhibition dans lesquels ledit mouvement des seconds organes (4) de contact au sol est respectivement permis et empêché,
**caractérisé en ce que**:
lesdits premiers et seconds moyens (85) de contrôle d'oscillation sont reliés pour éviter un état simultané d'habilitation à la fois dans les premiers et seconds moyens (85) de contrôle d'oscillation; et
lesdits moyens (26, 49) de contrôle de suspension comprennent en outre un capteur (91), détectant une variable indicatrice (Gi) de la position relative de la projection du centre de gravité (G) du véhicule utilitaire (1) par rapport aux premiers et seconds organes (3, 4) de contact au sol et générant une sortie utilisée dans le changement d'état des premiers et seconds moyens de contrôle d'oscillation (85).

2. Véhicule utilitaire selon la revendication 1, **caractérisé en ce que**:
lorsque ladite projection verticale (Gi) se trouve à proximité desdits premiers organes de contact au sol (3), le premier moyen de contrôle d'oscillation (85) est placé dans l'état d'inhibition d'oscillation et le second moyen de contrôle d'oscillation (85) est placé dans l'état d'habilitation d'oscillation; et
lorsque ladite projection verticale (Gi) se trouve à proximité desdits seconds organes de contact au sol (4), le second moyen de contrôle d'oscillation est placé dans l'état d'inhibition d'oscillation et le premier moyen de contrôle d'oscillation est placé dans l'état d'habilitation d'oscillation.

3. Véhicule utilitaire selon la revendication 1 ou 2, **caractérisé en ce que** ledit capteur (91) détecte l'inclinaison du châssis (2) dans le sens de ladite première extrémité vers ladite seconde extrémité.

4. Véhicule utilitaire selon l'une quelconque des revendications précédentes, **caractérisé en ce que**:
lesdits premiers moyens de suspension comprennent deux premiers moyens d'actionneurs hydrauliques (17, 18) et lesdits seconds moyens de suspension comprennent deux seconds moyens d'actionneurs hydrauliques (23, 24);
lesdits premiers moyens d'oscillation (27) comprennent une première conduite hydraulique d'oscillation (29, 79) interconnectant lesdits premiers moyens d'actionneurs hydrauliques (17, 18);
lesdits seconds moyens d'oscillation (77) comprennent une seconde conduite hydraulique d'oscillation (34, 35) interconnectant lesdits seconds moyens d'actionneurs hydrauliques (22, 23); et
lesdits premiers et seconds moyens de contrôle de suspension comprennent un moyen de soupape hydraulique (85) dont la fonction est d'interrompre respectivement lesdites première et seconde conduites hydrauliques (29, 79 et 34, 35).

5. Véhicule utilitaire selon la revendication 4, **caractérisé en ce que**:
lesdits premiers moyens d'actionneurs hydrauliques et lesdits seconds moyens d'actionneurs hydrauliques sont des premiers et des seconds cylindres hydrauliques (17, 18 et 23, 24) possédant des chambres d'extrémité de tête et d'extrémité de tige;
ladite première conduite hydraulique d'oscillation (29, 79) interconnecte les chambres d'extrémité de tige des premiers cylindres hydrauliques (17, 18) et ladite seconde conduite hydraulique d'oscillation (34, 35) interconnecte les chambres d'extrémité de tête des seconds cylindres hydrauliques (23, 24).

6. Véhicule utilitaire selon la revendication 4 ou 5, **caractérisé en ce que** lesdits moyens de soupape hydraulique comprennent une simple soupape 4/2 (85) raccordée aux deux première et seconde conduites hydrauliques (29, 79 et 34, 35).

7. Véhicule utilitaire selon la revendication 6, lorsqu'elle se rapporte à la revendication 3,
**caractérisé en ce que** ladite soupape 4/2 (85) est contrôlée par un solénoïde commandé par ledit capteur d'inclinaison (91).

8. Véhicule utilitaire selon l'une quelconque des revendications précédentes, **caractérisé en ce que** lesdits moyens de contrôle de suspension (26, 49) comprennent en outre des moyens de mise à niveau afin de modifier la position desdits premiers organes de contact au sol (3) et desdits seconds organes de contact au sol (4) par rapport audit châssis (2), dans le but de faire varier la hauteur et/ou l'inclinaison dudit châssis (2) par rapport au sol.

9. Véhicule utilitaire selon la revendication 8, lorsqu'elle dépend d'une quelconque des revendications 4 à 7, **caractérisé en ce que** lesdits moyens de mise à niveau comprennent un circuit hydraulique (26) relié d'une part auxdits premiers moyens d'actionneurs hydrauliques (17, 18) et seconds moyens d'actionneurs hydrauliques (23, 24), et d'autre part à une source (42) d'huile sous pression et à une évacuation (46), via d'autres moyens de soupapes hydrauliques (38, 39).

10. Véhicule utilitaire selon la revendication 9, **caractérisé en ce que**:
lesdits autres moyens de soupapes (38, 39) comprennent une première soupape latérale de mise à niveau (38), raccordée à un premier moyen d'actionneur hydraulique (17) et à un second moyen d'actionneur hydraulique (23) d'un côté du châssis (2), et une seconde soupape de mise à niveau (39), raccordée à l'autre premier moyen d'actionneur hydraulique (18) et à l'autre second moyen d'actionneur (24) de l'autre côté dudit châssis (2); et
lesdits moyens de mise à niveau comprennent en outre un moyen de commande (51) destiné à actionner simultanément les deux première et seconde soupapes de mise à niveau (38 et 39) afin de faire varier l'inclinaison latérale du châssis (2) ou la hauteur totale du châssis (2).

11. Véhicule utilitaire selon la revendication 10, **caractérisé en ce que**:
lesdites première et seconde soupapes de mise à niveau (38 et 39) sont des soupapes 3/4 contrôlées par solénoïde et ledit moyen de commande (51) comprend un contact de fermeture de circuit pour chaque solénoïde desdites soupapes latérale de mise à niveau (38, 39); et
ledit moyen de commande (51) comprend en outre un levier destiné à fermer simultanément deux contacts adjacents.

12. Véhicule utilitaire selon l'une quelconque des revendications 8 à 11, **caractérisé en ce que** lesdits moyens de mise à niveau comprennent des moyens de mise à niveau d'extrémité destinés à faire varier l'inclinaison du châssis (2) dans le sens allant de ladite première extrémité vers ladite seconde extrémité.

13. Véhicule utilitaire selon la revendication 12, lorsqu'elle dépend de la revendication 10 ou 11, **caractérisé en ce que** lesdits moyens de mise à niveau d'extrémité comprennent une soupape hydraulique de mise à niveau d'extrémité (87) intégrée dans ledit circuit hydraulique (26) de telle sorte que l'activation de ladite soupape (87) autorise le mouvement de soit les premiers moyens d'actionneurs (17, 18) ou soit les seconds moyens d'actionneurs (23, 24) en actionnant de l'une desdites soupapes latérales de mise à niveau (38/39), tandis que ladite soupape de mise à niveau d'extrémité (87) empêche respectivement le mouvement d'au moins un des seconds ou des premiers moyens d'actionneurs (23, 24 / 17, 18).

14. Véhicule utilitaire selon l'une quelconque des revendications précédentes, **caractérisé en ce que** ledit véhicule possède un châssis d'enjambement (2) et comprend une unité de récolte de raisin (5).

15. Méthode de stabilisation d'un véhicule utilitaire comprenant:
- un châssis (2) rectangulaire généralement horizontal avec des côtés opposés et des extrémités opposées;
- deux premiers organes de contact au sol (3) à une première extrémité dudit châssis (2) et des seconds organes de contact au sol (4) à sa seconde extrémité, opposée;
- des premiers moyens de suspension, montés pour soutenir entre ledit châssis (2) et lesdits premiers organes de contact au sol (3), et comprenant des premiers moyens d'oscillation (27) destinés à réaliser un mouvement d'un des premiers organes de contact au sol (3) en opposition avec le mouvement de l'autre premier organe de contact au sol(3) ; et
- des seconds moyens de suspension, montés pour soutenir entre ledit châssis (2) et lesdits seconds organes de contact au sol (4), comprenant des seconds moyens d'oscillation destinés (77) à réaliser un mouvement d'un des seconds organes de contact au sol (4) en opposition au mouvement de l'autre second organe de contact au sol (4); et
cette méthode, comprenant les étapes:
- de vérification à l'aide de moyens de capteur (91), de la position de la projection verticale (Gi) du centre de gravité (G) du véhicule utilitaire à proximité des premiers organes de contact au sol (3) ou des seconds organes de contact au sol (4); et lorsqu'une telle situation est rencontrée,
- d'inhibition du fonctionnement libre des moyens d'oscillation (24/77) des organes (3/4) à la proximité desquels se trouve ladite projection (Gi); et
- d'habilitation du fonctionnement libre des moyens d'oscillation (77/27) des autres organes (4/3).

16. Méthode selon la revendication 15, **caractérisée en ce que** l'étape de vérification comprend les étapes secondaires:
- de détection de l'inclinaison du châssis (2) dans le sens allant de ladite première extrémité vers ladite seconde extrémité; et
- de génération d'un signal lorsque ledit châssis possède une inclinaison montante; ou
- de génération d'un autre signal lorsque ledit châssis possède une inclinaison descendante.

17. Méthode selon la revendication 16, **caractérisée en ce que**:
l'étape d'inhibition comprend un changement de l'état d'un moyen de contrôle d'oscillation (95) relié fonctionnellement auxdits moyens d'oscillation (27/77); et
l'étape d'habilitation comprend un changement de l'état d'un moyen de contrôle d'oscillation (85) relié fonctionnellement aux autres moyens d'oscillation (77/27).

18. Méthode selon la revendication 17, **caractérisée en ce que** l'un et l'autre moyen de contrôle d'oscillation (85) sont couplés pour empêcher un état d'habilitation simultané dans les moyens de contrôle d'oscillation (85) des deux moyens d'oscillation (27, 77).

19. Méthode selon l'une quelconque des revendications 16 à 18, **caractérisée en ce que**:
ladite étape de vérification est répétée constamment; et
lesdites étapes d'inhibition et d'habilitation sont exécutées automatiquement lorsque ladite projection verticale (Gi) s'est déplacée de la proximité des premiers organes de contact au sol (3) vers la proximité des seconds organes de contact au sol (4), ou vice versa.

20. Méthode selon l'une quelconque des revendications 16 à 19, **caractérisée par** les autres étapes:
- de vérification de l'inclinaison du châssis (2) dans le sens allant d'un côté vers l'autre; et
- de fonctionnement des moyens de contrôle de suspension (26, 49) reliés fonctionnellement auxdits premier et second moyens de suspension afin de maintenir le châssis (2) dans une position de niveau dans ledit sens allant d'un côté vers l'autre.
